# EUROPEAN PATENT APPLICATION

(11) **EP 4 721 857 A1**
(43) Date of publication of application: **08.04.2026**
(21) Application number: 24814869.4
(22) Date of filing: 13.02.2024
(51) Int. Cl.: B01J 35/50, B01J 27/24, B01J 35/57, B01J 37/08, C01B 3/04

(54) **CATALYST-CARRYING HONEYCOMB STRUCTURE AND METHOD FOR MANUFACTURING THE SAME**

(30) Priority: 26.05.2023 JP 2023087328
(71) Applicant: Tokyo Yogyo Kabushiki Kaisha, Tokyo 108-0075 (JP)
(72) Inventor: SEIKI Susumu, Tajimi-shi, Gifu 507-0818 (JP)
(74) Representative: Hoffmann Eitle
(86) International application number: PCT/JP2024/004704
(87) International publication number: WO 2024/247382

(57) **Abstract**

Provided is a catalyst-supporting honeycomb structure capable of achieving both an improved conversion of ammonia and an improved life of a catalyst.

A catalyst-supporting honeycomb structure (1) includes a ceramic honeycomb structure (2), a catalyst layer (3) that is formed in a flow channel (2a) of the honeycomb structure (2) and decomposes ammonia, and electrodes (4a, 4b) each formed on a lateral surface of the honeycomb structure (2). A current is applied to the honeycomb structure (2).

## Description

### Technical Field

The present invention relates to a honeycomb structure supporting a catalyst for decomposing ammonia, and a method for producing the honeycomb structure.

### Background Art

To address the recent global warming, active efforts have been made toward a hydrogen society where hydrogen is mainly used as a source of combustion. With regard to production of hydrogen, ammonia has drawn attention. This is because ammonia is composed of hydrogen and nitrogen atoms, so that CO₂ is not generated in the decomposition reaction of ammonia. In addition, a hydrogen station for supplying hydrogen and a hydrogen pressure vessel filled with hydrogen are not necessary. For this reason, a technique for decomposing ammonia to produce hydrogen and oxygen has come into use for automobile fuel cells and industrial furnaces.

Patent Literature 1 discloses an invention in which a catalyst for decomposing ammonia is supported on a metallic honeycomb structure, and ammonia is allowed to pass through a flow channel of the honeycomb structure, thereby decomposing the ammonia to produce hydrogen and oxygen. The decomposition reaction of ammonia is an endothermic reaction. In the invention disclosed in Patent Literature 1, heat necessary for decomposition of ammonia is supplied by contacting a heater with the upstream side of the honeycomb structure to supply heat to the honeycomb structure from the heater.

### Citation List

### Patent Literature

Patent Literature 1: JP 2010-195642 A

### Summary of Invention

### Technical Problem

However, the invention disclosed in Patent Literature 1 has a problem that since a metallic honeycomb structure supporting a catalyst is heated by contacting a heater, the temperature distribution of the honeycomb structure cannot be made uniform, and it is not possible to achieve both an improved conversion of ammonia and an improved life of the catalyst.

This is explained as follows. In the decomposition reaction of ammonia, the conversion of ammonia can be improved by raising the reaction temperature. On the other hand, if the reaction temperature is raised, the life of the catalyst is shortened by growth or the like of fine particles of the catalyst. In the invention disclosed in Patent Literature 1, an improved conversion of ammonia leads to a decrease in life of a portion of the catalyst where the temperature is high, and an increased life of the catalyst leads to a decrease in conversion of ammonia in a portion of the catalyst where the temperature is low.

The present invention has been made in view of the above-described problems, and an object of the present invention is to provide a catalyst-supporting honeycomb structure capable of achieving both an improved conversion of ammonia and an improved life of a catalyst, and a method for producing the catalyst-supporting honeycomb structure.

### Solution to Problem

For solving the above-described problems, an aspect of the present invention is a catalyst-supporting honeycomb structure including a ceramic honeycomb structure, a catalyst layer that is formed in a flow channel of the honeycomb structure and decomposes ammonia, and an electrode formed on a lateral surface of the honeycomb structure, in which a current is applied to the honeycomb structure.

Another aspect of the present invention is a method for producing a catalyst-supporting honeycomb structure including the steps of: preparing a honeycomb structure by sintering a honeycomb compact containing silicon carbide powder, silicon nitride powder and carbon; forming an electrode on a lateral surface of the honeycomb structure; and forming a catalyst layer that decomposes ammonia in a flow channel of the honeycomb structure, in which a current is applied to the honeycomb structure.

### Advantageous Effects of Invention

According to the present invention, the honeycomb structure can be uniformly heated, so that both an improved conversion of ammonia and an improved life of a catalyst can be achieved.

### Brief Description of Drawings

Fig. 1 illustrates a perspective view of an appearance of a catalyst-supporting honeycomb structure according to an embodiment of the present invention.
Fig. 2 illustrates a perspective view of an appearance of a honeycomb structure.
Fig. 3 illustrates schematic views of a honeycomb compact containing silicon carbide powder, silicon nitride powder and carbon before and after sintering.
Fig. 4 illustrates a perspective view of a catalyst-supporting honeycomb structure that is elongated in a gas flow direction.
Fig. 5 illustrates a perspective view of a catalyst-supporting honeycomb structure that is elongated in a direction perpendicular to a gas flow.
Fig. 6 illustrates a front view of a honeycomb structure prepared in an example.
Fig. 7(a) is a graph that illustrates temperatures T1, T2 and T3 changed upon passage of a current of 5A through the honeycomb structure, and Fig. 7(b) illustrates a thermography of the honeycomb structure at T2=165°C.
Fig. 8(a) is a graph that illustrates temperatures T1, T2 and T3 changed upon passage of a current of 10A through the honeycomb structure, and Fig. 8(b) illustrates a thermography of the honeycomb structure at T2=300°C.
Fig. 9(a) is a graph that illustrates temperatures T1, T2 and T3 changed upon passage of a current of 20A through the honeycomb structure, and Fig. 9(b) illustrates a thermography of the honeycomb structure at T2=400°C.

### Description of Embodiments

Hereinafter, a catalyst-supporting honeycomb structure and a method for producing the same according to an embodiment of the present invention will be described with reference to the drawings. However, the catalyst-supporting honeycomb structure and the method for producing the same according to the present invention can be realized in various forms, and are not limited to the embodiment described in the present specification. The present embodiment is provided with the intention of complementing the disclosure of the present specification to ensure that those skilled in the art can fully understand the invention.

### (Catalyst-supporting honeycomb structure)

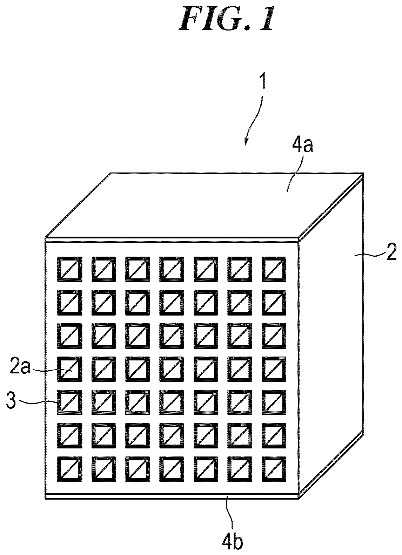

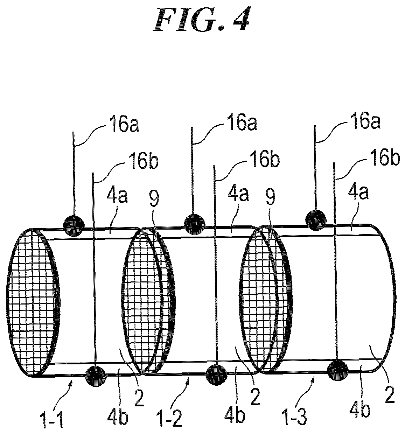

Fig. 1 illustrates a perspective view of an appearance of a catalyst-supporting honeycomb structure according to an embodiment of the present invention. A catalyst-supporting honeycomb structure 1 of the present embodiment includes a ceramic honeycomb structure 2, a catalyst layer 3 formed in a flow channel 2a of the honeycomb structure 2, and a pair of electrodes 4a and 4b formed on lateral surfaces of the honeycomb structure 2. The catalyst-supporting honeycomb structure 1 is housed in a reaction vessel (not shown) including a gas inlet and a gas outlet. The shape of the catalyst-supporting honeycomb structure 1, the number of flow channels 2a, and the like are not limited. A columnar shape (see Fig. 4), an oval shape, a rectangular parallelepiped shape (see Fig. 1), or the like may be adopted.

When ammonia is supplied into the gas inlet of the reaction vessel, ammonia flows through the flow channel 2a of the honeycomb structure 2. When ammonia flows through the flow channel 2a, the catalyst layer 3 decomposes ammonia to produce hydrogen and nitrogen in accordance with the reaction scheme of formula 1. The produced hydrogen and nitrogen are discharged from a gas outlet of the reaction vessel.

(Formula 1) 2NH₃→N₂+3H₂

The reaction of formula 1 is an endothermic reaction. For reducing the amount of heat absorption, ammonia and air may be supplied into the gas inlet of the reaction vessel, with the ammonia and air flowing through the flow channel 2a of the honeycomb structure 2. When ammonia and air flow through the flow channel 2a, heat is generated by a catalytic reaction of ammonia and oxygen as in formula 2. This heat can reduce the amount of heat absorption.

(Formula 2) NH₃+3/4O₂→1/2N₂+3/2H₂O

### (Honeycomb structure)

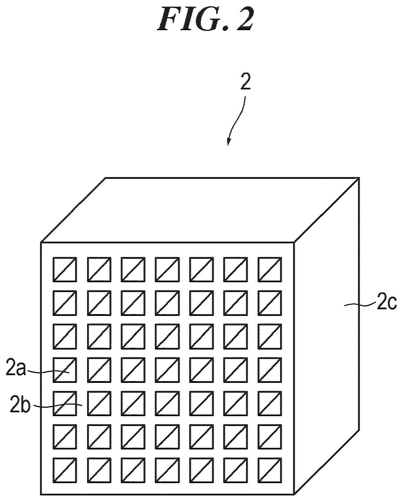

As shown in Fig. 2, the honeycomb structure 2 includes a plurality of cells 2a that are flow channels 2a through which ammonia flows, and that extend from an end surface on the inflow side to an end surface on the outflow side, a porous partition wall 2b that defines a plurality of cells 2a, and an outer peripheral wall 2c located on an outermost periphery. The shape of the honeycomb structure 2, the number of cells 2a, the thickness of the partition wall 2b, and the like are not limited, and are appropriately designed as necessary. For example, the shape of the honeycomb structure 2 may be a thin and long cylinder shape.

The honeycomb structure 2 is made of ceramic. The honeycomb structure 2 is electrically conductive. The honeycomb structure 2 contains silicon carbide as a main component, and nitrogen as an impurity. The phrase "containing silicon carbide as a main component" means that the honeycomb structure 2 contains silicon carbide in an amount of 90 mass% or more with respect to the entire honeycomb structure.

The honeycomb structure 2 is prepared by sintering a honeycomb compact containing silicon carbide powder, silicon nitride powder, and carbon. The silicon carbide powder is used as an aggregate for the honeycomb structure 2. Silicon nitride powder and carbon are used as a bonding material for bonding silicon carbide powder.

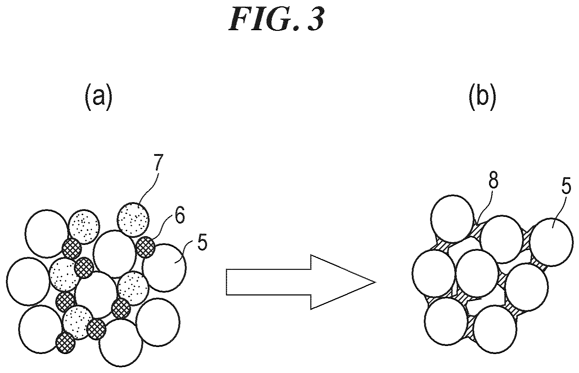

Fig. 3(a) is a schematic view of particles of the honeycomb compact before sintering. Reference numeral 5 denotes silicon carbide powder, reference numeral 6 denotes silicon nitride powder, and reference numeral 7 denotes carbon. When the honeycomb compact is sintered, silicon nitride and carbon react to synthesize silicon carbide as in formula 3 below.

(Formula 3) Si₃N₄+3C→3SiC+2N₂

As shown in Fig. 3(b), the synthesized silicon carbide 8 bonds the silicon carbide powder 5 used as an aggregate. The reaction temperature in formula 3 is lower than the softening point of silicon carbide particles. By using the silicon nitride powder 6 and the carbon 7 as a bonding material for bonding the silicon carbide powder 5, the grain growth of the silicon carbide powder 5 can be suppressed, so that a fine and uniform pore size distribution of the honeycomb structure 2 can be achieved.

The honeycomb structure 2 contains nitrogen derived from silicon nitride powder as an impurity. Since nitrogen functions as a dopant that contributes to electrical conduction, the honeycomb structure 2 is electrically conductive. When a current is applied to the honeycomb structure 2, the honeycomb structure 2 generates heat. Since the honeycomb structure 2 has a fine and uniform pore size distribution, the honeycomb structure 2 is uniformly heated.

Hereinafter, an example of a method for producing the honeycomb structure 2 will be described. First, water, a binder and the like are added to silicon carbide powder, silicon nitride powder and carbon to prepare a forming raw material. The average particle size of the silicon carbide powder is 1 to 50 µm. The content of the silicon carbide powder with respect to the silicon carbide powder, silicon nitride powder and carbon is 20 to 70 mass%. The carbon is graphite, carbon black or the like. The molar ratio of silicon forming silicon nitride to carbon is in a range of 1.0 to 2.0.

The binder is methyl cellulose or the like. The content of the binder is 2 to 15 parts by mass when the total mass of the silicon carbide powder, the silicon nitride powder and the carbon is 100 parts by mass. The content of the water is 20 to 30 parts by mass when the total mass of the silicon carbide powder, the silicon nitride powder and the carbon is 100 parts by mass. In addition to the above-described raw materials, a surfactant such as ethylene glycol, dextrin, fatty acid soap or polyalcohol may be added.

Next, the obtained forming raw material is kneaded to prepare a paste, and the paste is then extruded to prepare a honeycomb compact. The honeycomb compact is dried, and then sintered at a temperature of, for example, 1800°C to 2300°C in a non-oxidizing atmosphere such as vacuum or an inert gas, which is free of nitrogen, thereby preparing the honeycomb structure 2.

It is to be noted that the honeycomb structure 2 may contain a silicon-silicon carbide composite material as a main component. The silicon-silicon carbide composite material contains silicon carbide particles as an aggregate, and metal silicon as a bonding material for bonding the silicon carbide particles.

### (Electrode)

As shown in Fig. 1, a pair of electrodes 4a and 4b are formed on lateral surfaces of the honeycomb structure 2. The electrodes 4a and 4b have a band shape, and extend in the same direction as the cell 2a of the honeycomb structure 2. The electrodes 4a and 4b are arranged so as to face each other with the center of the honeycomb structure 2 therebetween.

The electrodes 4a and 4b are formed of an electrically conductive material. The material of the electrodes 4a and 4b is a metal, an electrically conductive ceramic, a composite material obtained by combining a metal and an oxide ceramic, or the like. The metal is silver, copper, iron, aluminum, tungsten, alloy steel, or the like. The conductive ceramic is silicon carbide, chromium silicide, boron carbide, chromium boride, tantalum silicide, or the like. The oxide ceramic is glass, cordierite, mullite, or the like.

An intermediate layer (not shown) having a thermal expansion coefficient lower than that of the electrodes 4a and 4b may be provided on the honeycomb structure 2 side of each of the electrodes 4a and 4b. The electrodes 4a and 4b have a higher thermal expansion coefficient than that of the honeycomb structure 2. By providing the intermediate layer, the difference in thermal expansion coefficient between the electrodes 4a and 4b and the honeycomb structure 2 can be reduced. Like the electrodes 4a and 4b, the intermediate layer is composed of a metal, an oxide ceramic or the like.

The intermediate layer and the electrodes 4a and 4b are formed in the following manner, for example. Metal powder and glass powder are mixed to prepare a ceramic raw material. A binder, a surfactant and water are added to the ceramic raw material to prepare a paste for intermediate layers. The paste for intermediate layers is applied onto the honeycomb structure 2, and dried to form a coating film. The honeycomb structure 2 with the coating film is sintered to form the intermediate layer.

The same applies to the electrodes 4a and 4b formed on the intermediate layers. That is, metal powder and glass powder are mixed to prepare a ceramic raw material. A binder, a surfactant and water are added to the ceramic raw material to prepare a paste for electrodes. The paste for electrodes is applied onto the intermediate layer of the honeycomb structure 2, and dried to form a coating film. The honeycomb structure 2 with the coating film is sintered to form electrodes 4a and 4b. Here, the honeycomb compact and the intermediate layer may be sintered at the same time, or the honeycomb compact, the intermediate layer and the electrodes 4a and 4b may be sintered at the same time.

It is to be noted that the intermediate layers and the electrodes 4a and 4b may be formed by spraying a spray material to the honeycomb structure 2. It is desirable that a spray raw material here contain tungsten carbide as a main component, and nickel. It is desirable that the spray material have a nickel content of 3 to 40 mass%, and a tungsten carbide content of 60 to 90 mass%.

### (Catalyst layer)

As shown in Fig. 1, a catalyst layer 3 is formed in the cell 2a of the honeycomb structure 2. The catalytically active species used for the catalyst layer 3 is not particularly limited as long as it decomposes ammonia into hydrogen. As the catalytically active species, at least one element selected from the group consisting of Group 6, Group 7, Group 8, Group 9, Group 10 and Group 11 is selected. The catalytic metal is, for example, ruthenium, rhodium, palladium, or platinum, and the like.

The catalytically active species can be supported on a catalyst carrier including an oxide containing at least one element selected from the group consisting of Al, Si, Ti, Zr, Group 1, Group 2 and Group 3. The oxide may be a composite oxide containing two or more oxides. In addition, the oxide may be zeolite. Supporting the catalytically active species on such a catalyst carrier including an oxide contributes to improved dispersibility of the catalytically active species and improved mechanical strength of the catalyst.

For a method for forming the catalyst layer 3, a common procedure can be used. It is possible to use, for example, a method in which a catalytically active species is wet-pulverized to form a slurry, and the slurry is applied to the honeycomb structure 2, a method in which powder with a catalytically active species supported on a catalyst carrier including an oxide is wet-pulverized to form a slurry, and the slurry is applied to the honeycomb structure 2, or a method in which a catalyst carrier including an oxide is wet-pulverized to form a slurry, the slurry is applied to the honeycomb structure 2, a catalytically active species is then wet-pulverized to form a slurry, and the slurry is further applied to the honeycomb structure 2.

### (Approach to elongation)

When the catalyst-supporting honeycomb structure 1 is elongated in a gas flow direction, a plurality of catalyst-supporting honeycomb structures 1-1, 1-2 and 1-3 are arranged in the gas flow direction and an insulating layer 9 is provided between the catalyst-supporting honeycomb structures 1-1, 1-2 and 1-3 as shown in Fig. 4. The catalyst-supporting honeycomb structures 1-1, 1-2 and 1-3 are each provided with electrodes 4a and 4b so that a current can be applied on an individual basis. Electric wires 16a and 16b are connected to the electrodes 4a and 4b for supplying electricity.

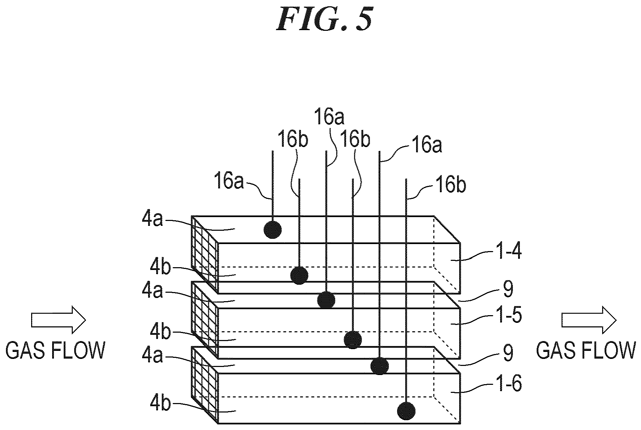

When the catalyst-supporting honeycomb structure 1 is elongated in a radial direction (a direction perpendicular to the gas flow), a plurality of catalyst-supporting honeycomb structures 1-4, 1-5 and 1-6 are arranged in a direction perpendicular to the gas flow and the insulating layer 9 is provided between the catalyst-supporting honeycomb structures 1-4, 1-5 and 1-6 as shown in Fig. 5. The catalyst-supporting honeycomb structures 1-4, 1-5 and 1-6 are each provided with electrodes 4a and 4b so that a current can be applied on an individual basis. Electric wires 16a and 16b for supplying electricity are connected to the electrodes 4a and 4b. It is to be noted that a plurality of catalyst-supporting honeycomb structures may be arranged in a direction perpendicular to the gas flow, with a plurality of catalyst-supporting honeycomb structures being arranged in the gas flow direction.

The catalyst-supporting honeycomb structures 1-1, 1-2 and 1-3 shown in Fig. 4 may be identical in both the type and the support amount of the catalyst, or different in at least one of the type and the support amount of the catalyst. Similarly, the catalyst-supporting honeycomb structures 1-4, 1-5 and 1-6 shown in Fig. 5 may be identical in both the type and the support amount of the catalyst, or different in at least one of the type and the support amount of the catalyst. When there is a difference in at least one of the type and the support amount of the catalyst, the heating temperature (heat amount) may be changed according to a type and a support amount of the catalyst. For example, in Fig. 4, the heating temperature for the downstream catalyst-supporting honeycomb structures 1-2 and 1-3 may be higher than the heating temperature for the upstream catalyst-supporting honeycomb structure 1-1, where a catalyst capable of oxidizing and decomposing ammonia is used for the upstream catalyst-supporting honeycomb structure 1-1, and a catalyst capable of decomposing ammonia is used for the downstream catalyst-supporting honeycomb structures 1-2 and 1-3.

The insulating layer 9 is a plate-shaped insulator of silica, alumina or the like, or an air layer (gap) provided between the catalyst-supporting honeycomb structures 1-1, 1-2 and 1-3. When a plate-shaped insulator is used, a plurality of honeycomb compacts and plate-shaped insulators are degreased, and fired, thereby being integrated, and the electrodes 4a and 4b are formed in each honeycomb structure 2.

### (Effects)

Hereinafter, effects of the catalyst-supporting honeycomb structure 1 of the present embodiment will be described.

The catalyst-supporting honeycomb structure 1 of the present embodiment is capable of achieving both an improved conversion of ammonia and an improved life of a catalyst because the honeycomb structure 2 can be uniformly heated.

Since the honeycomb structure 2 contains silicon carbide as a main component, and nitrogen, the honeycomb structure 2 can be more uniformly heated.

Since a plurality of catalyst-supporting honeycomb structures 1-1, 1-2 and 1-3 are arranged in the gas flow direction and the insulating layer 9 is provided between the catalyst-supporting honeycomb structures 1-1, 1-2 and 1-3, a plurality of catalyst-supporting honeycomb structures 1-1, 1-2 and 1-3 elongated in the gas flow direction can be uniformly heated. Similarly, since a plurality of catalyst-supporting honeycomb structures 1-4, 1-5 and 1-6 are arranged in a direction perpendicular to the gas flow direction and the insulating layer 9 is provided between the catalyst-supporting honeycomb structures 1-4, 1-5 and 1-6, a plurality of catalyst-supporting honeycomb structures 1-4, 1-5 and 1-6 elongated in a direction perpendicular to the gas flow direction can be uniformly heated. In addition, a current can be applied to a plurality of catalyst-supporting honeycomb structures 1-1, 1-2 and 1-3 or 1-4, 1-5 and 1-6 on an individual basis.

### (Examples)

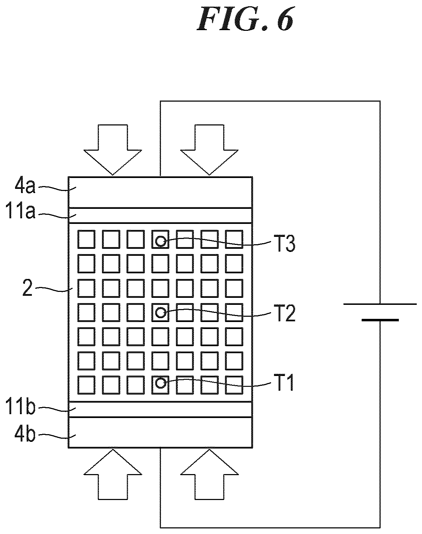

A honeycomb structure 2 shown in Fig. 6 was produced. Water, a binder and the like were added to silicon carbide powder, silicon nitride powder and carbon to prepare a forming raw material. The average particle size of the silicon carbide powder is 10 µm. The content of the silicon carbide powder with respect to the silicon carbide powder, silicon nitride powder and carbon is 50 mass%. As the carbon, carbon black was used. The molar ratio of silicon forming silicon nitride to carbon is 1.5.

As the binder, methyl cellulose was used. The content of the binder is 10 parts by mass when the total mass of the silicon carbide powder, the silicon nitride powder and the carbon is 100 parts by mass. The content of the water is 25 parts by mass when the total mass of the silicon carbide powder, the silicon nitride powder and the carbon is 100 parts by mass.

The obtained forming raw material was kneaded to prepare a paste, and the paste was then extruded to prepare a honeycomb compact. The honeycomb compact was dried, and then sintered at a temperature of 2100°C in a nitrogen-free non-oxidizing atmosphere to prepare the honeycomb structure 2.

The size of the honeycomb structure 2 was □ 50 mm × L 50mm, the structure of the cell 2a was 50 cpsi/25 mil, and the resistance of the honeycomb structure 2 was 0.5 Ωcm. The resistance was measured by a four-terminal method according to JIS R 1650-2: 2002. In addition, the presence of nitrogen was confirmed by measuring the nitrogen concentration of the honeycomb structure 2 according to JIS R 1616: 2007.

The electrodes 4a and 4b were pressed from above and below with carbon felts 11a and 11b sandwiched between the honeycomb structure 2 and the electrodes 4a and 4b, a constant current of 5A, 10A or 20A was supplied to the honeycomb structure 2, and the temperatures T1, T2 and T3 of the lower part, the middle part and the upper part, respectively, of the honeycomb structure 2 were measured.

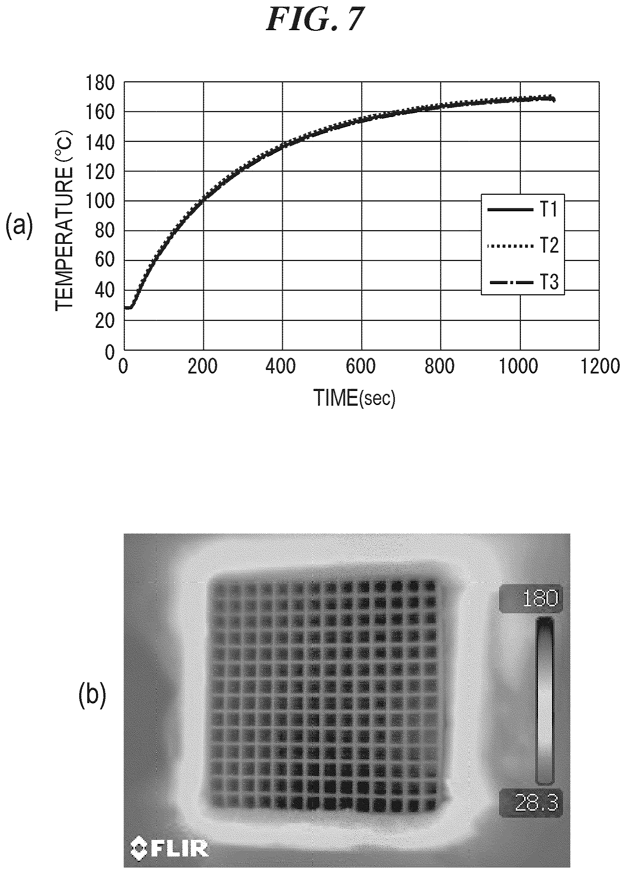

As shown in Fig. 7(a), supply of a current of 5A to the honeycomb structure 2 raised the temperatures T1, T2 and T3 over time, with the values of temperatures T1, T2 and T3 being substantially the same. In addition, as shown in the thermography at T2=165°C in Fig. 7(b), the entire honeycomb structure 2 was uniformly heated.

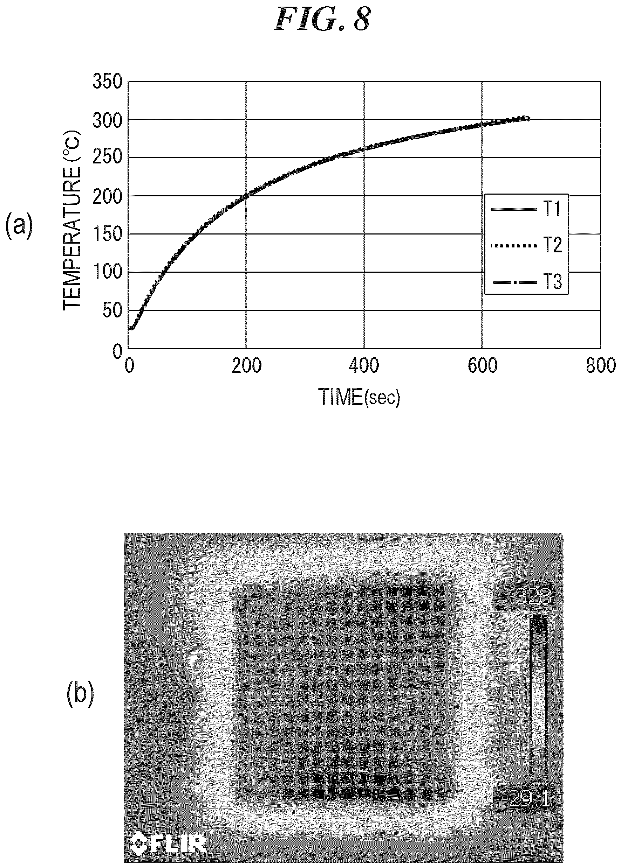

As shown in Figs. 8(a) and 8(b), the results of passage of a current of 10A through the honeycomb structure 2 were substantially the same as those of passage of a current of 5A through the honeycomb structure 2. It is to be noted that Fig. 8(b) shows a thermography at T2=300°C.

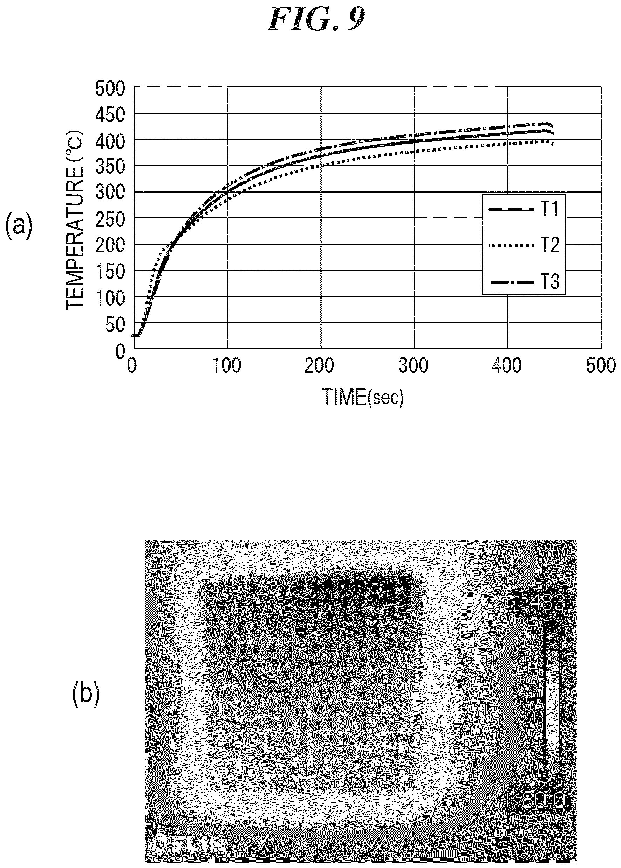

As shown in Fig. 9(a), passage of a constant current of 20A through the honeycomb structure 2 increased the effect of the contact resistance of the electrodes 4a and 4b, the carbon felts 11a and 11b and the honeycomb structure 2, leading to occurrence of slight variations between the temperatures T1, T2 and T3. However, even in this case, the entire honeycomb structure 2 was heated substantially uniformly as shown in the thermography at T2=400°C in Fig. 9(b). Since uniform heating can be performed, the ammonia conversion can be improved when the catalyst is supported.

The present specification is based on Japanese Patent Application No. 2023-087328 filed on May 26, 2023. The disclosure thereof is incorporated herein in its entirety.

### Reference Signs List

- 1: Catalyst-supporting honeycomb structure
- 2: Honeycomb structure
- 3: Catalyst layer
- 4a, 4b: Electrode
- 9: Insulating layer

## Claims

1. A catalyst-supporting honeycomb structure comprising:
a ceramic honeycomb structure,
a catalyst layer that is formed in a flow channel of the honeycomb structure and decomposes ammonia, and
an electrode formed on a lateral surface of the honeycomb structure,
wherein a current is applied to the honeycomb structure.

2. The catalyst-supporting honeycomb structure according to claim 1, wherein the honeycomb structure contains silicon carbide as a main component, and nitrogen.

3. The catalyst-supporting honeycomb structure according to claim 1 or 2, wherein a plurality of the catalyst-supporting honeycomb structures are arranged in a gas flow direction and/or a direction perpendicular to a gas flow, and an insulating layer is provided between the catalyst-supporting honeycomb structures.

4. A method for producing a catalyst-supporting honeycomb structure, comprising the steps of:
preparing a honeycomb structure by sintering a honeycomb compact containing silicon carbide powder, silicon nitride powder and carbon;
forming an electrode on a lateral surface of the honeycomb structure; and
forming a catalyst layer that decomposes ammonia in a flow channel of the honeycomb structure,
wherein a current is applied to the honeycomb structure.
